# EUROPÄISCHE PATENTANMELDUNG

(11) **EP 3 689 524 A1**
(43) Veröffentlichungstag der Anmeldung: **05.08.2020**
(21) Anmeldenummer: 20154585.2
(22) Anmeldetag: 30.01.2020
(51) Int. Cl.: B23D 61/06, B23C 5/08, B23C 5/22

(54) **SPANNABHEBENDES WERKZEUG**

(30) Priorität: 30.01.2019 AT 500722019
(71) Anmelder: MATE GmbH, 4656 Kirchham bei Vorchdorf (AT)
(72) Erfinder: Steinkogler, Michael, 4802 Ebensee (AT); Kubin, Wilhelm Klaus, 4810 Gmunden (AT)
(74) Vertreter: Hübscher & Partner Patentanwälte GmbH

(57) **Zusammenfassung**

Es wird ein spanabhebendes Werkzeug, insbesondere Sägeblatt, mit einem wenigstens eine Aufnahme (2) für einen Schneideeinsatz (3) bildenden Träger (1), wobei die eine Führungsbacke (4) und eine Anschlagsbacke (5) aufweisende Aufnahme (2) eine Backenanschlagfläche (10) für den Schneideeinsatz (3) und einen Klemmabschnitt (9) zum Greifen und Klemmen des Schneideeinsatzes (3) ausbildet, beschrieben. Um einen sicheren Betrieb auch bei hohen Vorschubgeschwindigkeiten, sowie eine Bearbeitung von hoch robusten Materialen zu erlauben, ohne dabei den Aufwand für Wartungsarbeiten zu erhöhen, wird vorgeschlagen, dass sich der Klemmabschnitt (9) zum klemmenden Greifen eines keilförmigen Klemmfortsatzes (6) des Schneideeinsatzes (3) von der Backenanschlagfläche (10) aus entgegen der Hauptschnittrichtung (11) keilförmig verjüngt.

## Beschreibung

Die Erfindung bezieht sich auf ein spanabhebendes Werkzeug, insbesondere Sägeblatt, mit einem wenigstens eine Aufnahme für einen Schneideeinsatz bildenden Träger, wobei die eine Führungsbacke und eine Anschlagsbacke aufweisende Aufnahme eine Backenanschlagfläche für den Schneideeinsatz und einen Klemmabschnitt zum Greifen und Klemmen des Schneideeinsatzes ausbildet.

Aus der DE2206654A1 ist ein spanabhebendes Werkzeug mit einer Aufnahme für einen Schneideeinsatz bekannt. Die Aufnahme bildet einerseits zwei Klemmbacken, die den Schneideeinsatz unter Vorspannung greifen, und andererseits eine Anschlagfläche für eine der Schnittfläche des Schneideeinsatzes abgewandten Seite aus. Auf diese Weise wird eine lösbare Verbindung zwischen Schneideeinsatz und der Aufnahme des spanabhebenden Werkzeuges erreicht, ohne dabei auf Befestigungsmittel wie Schraubverbindungen zurückgreifen zu müssen. Nachteilig daran ist allerdings, dass auf Grund der konstruktiven Bedingungen nur eine beschränkte Vorspannung auf den Schneideeinsatz ausgeübt werden kann, sodass es bei besonders großen, auftretenden Kräften, oder unvorhergesehen Kraftimpulsen zu einem ungewollten Herauslösen des Schneideeinsatzes kommen kann.

Die in der EP0095062A1 offenbarte Aufnahme eines spanabhebenden Werkzeuges bildet ebenfalls zwei Klemmbacken aus, deren Kontaktflächen die Kontaktflächen des Schneideeinsatzes wenigstens teilweise unter Vorspannung greifen. Damit während des Betriebs des Werkzeuges ein auftretender Schnittdruck zu einer proportionalen Erhöhung der Klemmspannung führt, steigt die Kontaktfläche einer Klemmbacke gegenüber der Klemmfläche des Schneideeinsatzes nach innen an. Die Erhöhung der Klemmspannung wird dabei von einer Anschlagfläche eines Klemmbackens begrenzt, sodass ein zu tiefes Eindringen des Schneideeinsatzes verhindert wird. Um trotz dieses Eindringungsschutzes eine Zugänglichkeit eines Werkzeuges zum Lösen des Schneideeinsatzes zu ermöglichen, muss die Anschlagfläche des Klemmbackens klein dimensioniert sein, sodass es allerdings beim Auftreten sehr großer Kräfte zu ungleichverteilten Druckspannungen innerhalb des Schneideeinsatzes kommt, die dessen Lebensdauer erheblich verkürzen.

Eine alternative Befestigung von Schneideeinsätzen für ein spanabhebendes Werkzeug wird in der WO2010083541A1 gezeigt. Die Schneideeinsätze werden hierbei in einer als Schneideeinsatzsitz gebildeten Ausnehmung des spanabhebenden Werkzeuges mittels Schraubenverbindungen befestigt. Auf diese Weise kann ein sicherer Sitz des Schneideeinsatzes auch bei unvorhergesehenen, eintretenden Kräfte gewährleistet werden. Nachteilig sind allerdings die damit einhergehenden aufwändigen Wartungsarbeiten. Muss ein abgenutzter Schneideeinsatz gewechselt werden, so muss erst die Schraubverbindung gelöst, der Schneideeinsatz ausgetauscht und dieser mit einem definierten Drehmoment wieder in der Ausnehmung festgeschraubt werden. Da beispielsweise Sägeblätter eine Vielzahl solcher Schneideeinsätze besitzen, bedeutet dieser Austauschprozess zur umfassenden Wartung des Werkzeuges einen beträchtlichen Zeitaufwand.

Der Erfindung liegt somit die Aufgabe zugrunde, ein spanabhebendes Werkzeug und einen damit kompatiblen Schneideeinsatz vorzuschlagen, die einen sicheren Betrieb auch bei hohen Vorschubgeschwindigkeiten, sowie eine Bearbeitung von hoch robusten Materialen erlauben, ohne dabei den Aufwand für Wartungsarbeiten zu erhöhen.

Die Erfindung löst die gestellte Aufgabe dadurch, dass sich der Klemmabschnitt zum klemmenden Greifen eines keilförmigen Klemmfortsatzes des Schneideeinsatzes von der Backenanschlagfläche aus entgegen der Hauptschnittrichtung keilförmig verjüngt.

Das erfindungsgemäße spanabhebende Werkzeug weist einen Träger, wie beispielsweise ein Sägeblatt, auf, der wenigstens zwei eine Aufnahme für einen Schneideeinsatz bildende Klemmbacken, nämlich eine Führungsbacke und eine Anschlagsbacke, ausbildet. Die Führungsbacke umfasst dabei eine Klemmfläche für den bodenseitigen Abschnitt eines kompatiblen, erfindungsgemäßen Schneideeinsatzes, der Gegenstand der Ansprüche 4 bis 6 ist. Die der Führungsbacke gegenüberliegende Anschlagsbacke weist hingegen lediglich eine Klemmfläche für den deckseitigen Abschnitt des Klemmfortsatzes eines erfindungsgemäßen Schneideeinsatzes auf. Auf diese Weise bietet die Anschlagsbacke eine ausreichend große Backenanschlagfläche für einen Schneideeinsatz, wodurch auch große Schnittkräfte aufgenommen und abgeleitet werden können, ohne inhomogene Spannungsverteilungen im Werkzeug zu erzeugen. Um eine definierte und ausreichend große Krafteinwirkung auf den Klemmfortsatz eines kompatiblen Schneideeinsatzes übertragen zu können, verjüngt sich der Klemmabschnitt der Aufnahme entgegen der Hauptschnittrichtung keilförmig. Auf dieses Weise wird ein Verkeilen des Klemmfortsatzes eines Schneideeinsatzes mit dem Klemmabschnitt der Aufnahme und damit ein sicherer Sitz eines Schneideeinsatzes durch einfaches Hineinklopfen, oder Hineinschlagen erzielt. Die Klemmung erfolgt nach einer Art der Klemmung, wie sie bei Morsekegeln oder Morsekoni bekannt ist. Die Keilform bewirkt die Klemmung des Klemmfortsatzes des Schneideeinsatzes in der Aufnahme des Trägers. Die Hauptschnittrichtung entspricht dabei der Hauptrichtung in die das Werkzeug beim Schneiden geführt wird. Bei einer Kreissäge wird diese Hauptrichtung als Richtung der Tangentialgeschwindigkeit des rotierenden Sägeblattes angesehen. Auf Grund der Tatsache, dass die Führungsbacke und die Anschlagsbacke ausschließlich einen Teil des Schneideeinsatzes, nämlich den von der Backenanschlagfläche entgegen der Hauptschnittrichtung verlaufende Klemmfortsatz greift, wird trotz des sicheren Sitzes in der Aufnahme ein einfacher Löseprozess gewährleistet. So kann durch Ansetzen eines geeigneten Lösewerkzeugs an dem der Schnittfläche eines Schneideeinsatzes abgewandten Ende des Klemmfortsatzes besagter Schneideeinsatz aus der Aufnahme herausgedrückt werden. Erfindungsgemäß wird zur Fixierung eines kompatiblen Schneideeinsatzes in der Aufnahme eines erfindungsgemäßen spanabhebenden Werkzeuges keine Schraubverbindung benötigt, wodurch die Dicke des Trägers und des Schneideeinsatzes, im Gegensatz zu vorbekannten Ausführungen, die eine Schraubverbindung als integralen Bestandteil der Fixierung aufweisen, wesentlich geringer dimensioniert werden kann.

Um ein exaktes Einführen von besonders schmalen erfindungsgemäßen Schneideeinsätzen in die Aufnahme des Trägers zu gewährleisten, wird vorgeschlagen, dass die Führungsbacke eine Führungsnut zur lateralen Abstützung eines bodenseitigen Ansatzes des Schneideeinsatzes aufweist. Dadurch kann sowohl ein Verrutschen eines einzusetzenden Schneideeinsatzes quer zur Einsetzrichtung, als auch ein Verdrehen desselbigen verhindert werden.

Damit ein erfindungsgemäßer Schneideeinsatz bei etwaigen Wartungsarbeiten gegen ein ungewünschtes Herauslösen aus der Aufnahme abgesichert ist, empfiehlt es sich in einer besonders praktischen Ausführungsform des erfindungsgemäßen spanabhebenden Werkzeuges, dass die Anschlagsbacke eine quer zu ihrer Klemmfläche verlaufende und die Klemmfläche durchbrechende Bohrung, insbesondere Gewindebohrung, aufweist. Durch diese Bohrung kann ein Sicherungselement zum Festhalten eines Schneideeinsatzes geführt sein. Das Sicherungselement übt dabei keine Spannung auf den Schneideeinsatz aus, sondern ragt in eine an die Bohrung anschließende Ausnehmung des Schneideeinsatzes, wodurch der Schneideeinsatz in seiner Bewegung in die und/oder entgegen der Hauptschnittrichtung begrenzt ist.

Um den Einsatz von Lösewerkzeugen zu erleichtern, kann an den sich verjüngenden keilförmigen Klemmabschnitt eine quer zur Hauptschnittrichtung und zu den Klemmflächennormalen verlaufende, zylindrische Werkzeugaufnahme zum Lösen des geklemmten Schneideeinsatzes anschließen. Dadurch kann eine Einführstellung eines als Drehschlüssel ausgebildeten Lösewerkzeugs vorgegeben und diesem beim Lösen eine geführte Drehbewegung aufgezwungen werden, in Folge dessen der Schneideeinsatz aus der Aufnahme gedrückt wird. Das Lösewerkzeug kann in einer alternativen Form auch einen einfachen, kegelförmigen Dorn ausbilden. Wird dieser in die Werkzeugaufnahme getrieben, so verdrängt der Dorn den Schneideeinsatz aus der Aufnahme. Zusätzlich dient die zylindrische Ausgestaltung der Werkzeugaufnahme der Vermeidung von Spannungsspitzen.

Ein für das erfindungsgemäße spanabhebende Werkzeug einsetzbarer Schneideeinsatz ist dadurch gekennzeichnet, dass dieser einen entgegen seiner Hauptschnittrichtung über eine Schneideeinsatzanschlagsfläche ragenden, keilförmigen Klemmfortsatz ausbildet. Im eingesetzten Zustand wird ausschließlich der Klemmfortsatz von der Aufnahme gegriffen, weswegen sich eine ausreichend große mit der Backenanschlagfläche der Anschlagsbacke in Kontakt stehenden Schneideeinsatzanschlagfläche zur Aufnahme besonders großer Kräfte ergibt. Da der keilförmige Klemmfortsatz hinter der Schneideeinsatzanschlagsfläche vom Schneideeinsatz abragt, kann der Klemmfortsatz selbst klein gehalten werden, womit der Träger erheblich weniger geschwächt wird.

Um eine ausreichend hohe Klemmkraft zu erzielen, kann der Klemmfortsatz einen etwas größeren Keilwinkel als der Klemmabschnitt aufweisen, wobei der Winkel des Klemmabschnittes im spannungsfreie Zustand, also ohne eingespannten Schneideeinsatz, gemeint ist. Bei entsprechend steifer Ausführung des Trägers sind die Keilwinkel von Klemmfortsatz und Klemmabschnitt in sehr engen Toleranzen gleich, um die gewünschte Klemmung nach Art von Morsekegeln oder Morsekoni zu erreichen.

Zur zusätzlichen Sicherung des Schneideeinsatzes, wird vorgeschlagen, dass der keilförmige Klemmfortsatz anschlagsbackenseitig eine Ausnehmung zum Aufnehmen eines Sicherungselementes, insbesondere einer Schraube, aufweist. Die Ausnehmung kann an etwaige die Klemmfläche der Anschlagsbacke durchbrechende Bohrungen anschließen, wodurch eine leicht zugängliche Sicherung erreicht wird. Hierfür können beispielsweise Wurmschrauben eingesetzt werden, die auch eine redundante Sicherung besonders schmaler Schneideeinsätze ermöglichen, zumal aus vorbekannten spanabhebenden Werkzeugen der Schraubenkopf der eingesetzten Schraubverbindungen oft die Dimensionierung des Trägers und des Schneideeinsatzes begrenzten. Da jedoch zur Fixierung des Schneideeinsatzes die durch die Aufnahme erzeugte Verkeilung genügt, muss das Sicherungselement, insbesondere die Schraube, keinen Kopf zum Eintrag von Kräften auf den Schneideeinsatz aufweisen, sondern lediglich einen Anschlag für die Ausnehmung des Klemmfortsatzes bilden.

Ein besonders einfacher Fügeprozess des Schneideeinsatzes in die Aufnahme des erfindungsgemäßen spanabhebenden Werkzeuges ergibt sich, wenn der Schneideeinsatz auf der führungsbackenzugewandten Bodenseite eine Führungsfeder aufweist. Auf diese Weise kann der Schneideeinsatz exakt in die Führungsnut eingesetzt werden, bevor dieser unter Krafteinfluss in die Aufnahme geklemmt wird, wodurch ein Verrutschen quer zur Fügerichtung verhindert wird.

In der Zeichnung ist der Erfindungsgegenstand beispielsweise dargestellt. Es zeigen
- Fig. 1: eine schematische Seitenansicht des erfindungsgemäßen spanabhebenden Werkzeugs mit dem eingesetzten erfindungsgemäßen Schneideeinsatz,
- Fig. 2: einen schematischen Schnitt durch das spanabhebende Werkzeug mit dem eingesetzten erfindungsgemäßen Schneideeinsatz,
- Fig. 3: eine Vorderansicht eines Abschnitts eines Trägers mit einem eingesetzten erfindungsgemäßen Schneideeinsatz und
- Fig. 4: eine schematische Schrägansicht auf einen erfindungsgemäßen Schneideeinsatz.

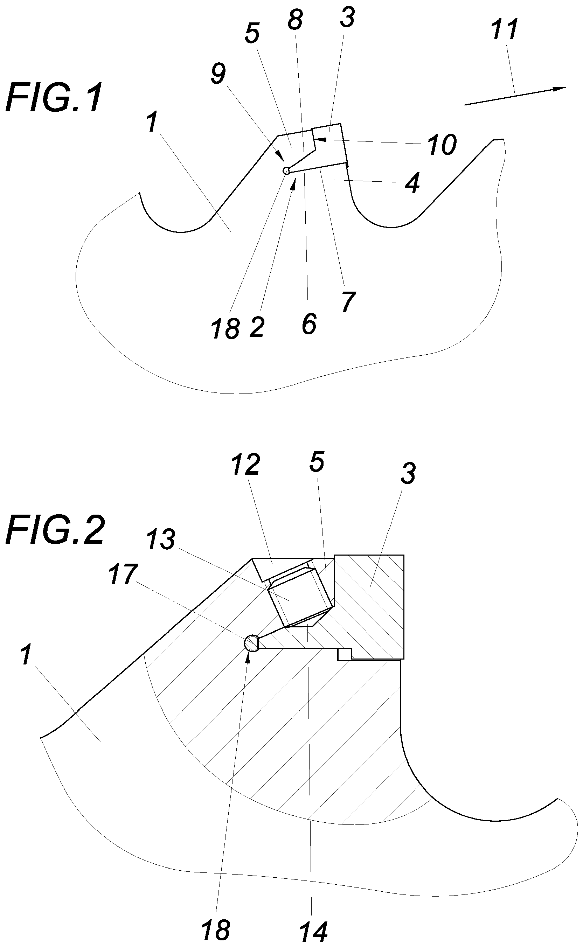

Das erfindungsgemäße spanabhebende Werkzeug, insbesondere Sägeblatt, weist wenigstens eine von einem Träger 1 gebildete Aufnahme 2 für einen Schneideeinsatz 3 auf. Die Aufnahme 2 bildet dabei eine Führungsbacke 4 und eine Anschlagsbacke 5 aus, die einen Klemmfortsatz 6 eines erfindungsgemäßen Schneideeinsatzes 3 klemmend greifen. Die Führungsbacke 4 umfasst eine Klemmfläche für den Bodenabschnitt 7 des Schneideeinsatzes 3, während die Anschlagsbacke 5 lediglich eine Klemmfläche für den Deckabschnitt 8 des Klemmfortsatzes 6 ausbildet. Der von der Führungsbacke 4 und der Anschlagsbacke 6 gebildete Klemmabschnitt 9 weist, wie in der Fig. 1 zu sehen, eine Keilform auf, die sich ausgehend von der Backenanschlagfläche 10 entgegen der Hauptschnittrichtung 11 verjüngt. Auf diese Weise kann bei ebenfalls keilförmiger Ausgestaltung des Klemmfortsatzes 6 ein sicherer Sitz des Schneideeinsatzes 3 auch bei hohen Vorschubgeschwindigkeiten erreicht werden. Durch die vorherrschende starke Klemmung, wie es beispielsweise bei Morsekegel bekannt ist, kann der Klemmabschnitt 9 und der Klemmfortsatz 6 schmal bezogen auf die Höhe des Schneideeinsatzes 3 ausgeführt sein, wodurch sich eine große Backenanschlagfläche 10 an der Anschlagsbacke 5 zur gleichmäßigen Kraftableitung großer Schnittkräfte für den Schneideeinsatz 3 bildet. Das bedeutet, Schnittkräfte werden über die Backenanschlagfläche 10 in den Träger 1 eingeleitet, wobei der Schneideeinsatz 3 über den Klemmabschnitt 9 und den Klemmfortsatz 6 am Träger 1 fixiert ist.

Wie in der Fig. 2 abgebildet, weist die Anschlagsbacke 5 eine Bohrung 12 auf, die diese durchbricht. Durch diese Bohrung 12, insbesondere Gewindebohrung, kann ein Sicherungselement 13, beispielsweise eine Wurmschraube oder andere für den Fachmann naheliegende, klein dimensionierte Sicherungselemente zum Festhalten des Schneideeinsatzes 3 geführt sein, wobei das Sicherungselement 13 keine Spannung auf den Schneideeinsatz 3 ausübt, sondern lediglich in die an die die Bohrung 12 anschließende Ausnehmung 14 ragt. Auf diese Weise wird der Schneideeinsatz 3 zur redundanten Sicherung in seiner Bewegung in die und/oder entgegen der Hauptschnittrichtung 11 begrenzt.

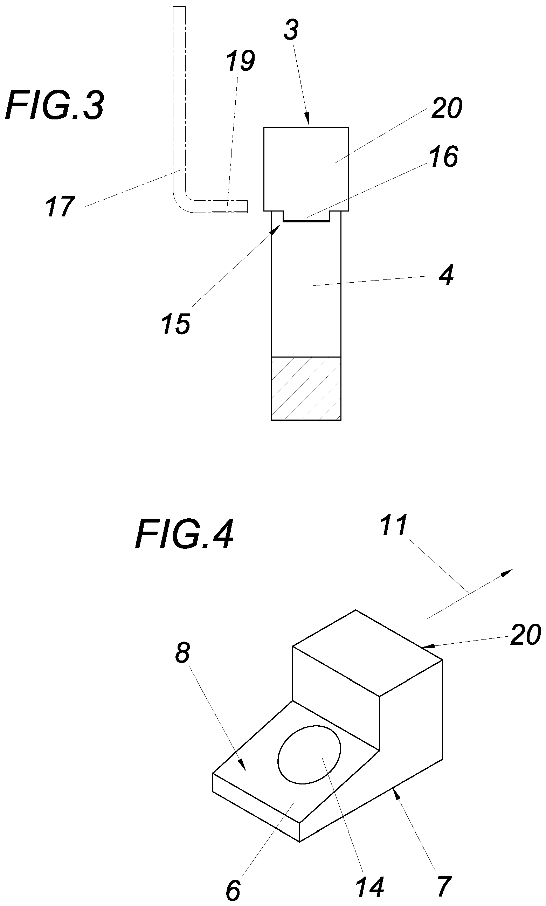

Eine besonders praktische Ausführung des erfindungsgemäßen spanabhebenden Werkzeuges mit einem erfindungsgemäßen Schneideeinsatz 3 ist in der Fig. 3 dargestellt. Um den Schneideeinsatz 3 gegen ein Verrutschen quer zur Hauptschnittrichtung 11 zu sichern und ein exaktes Einführen von sehr schmalen Schneideeinsätzen 3 zu ermöglichen, weist die Führungsbacke 4 eine Führungsnut 15 auf, die eine Aufnahme beziehungsweise Führung für eine Führungsfeder 16 ausbildet. Es versteht sich dabei von selbst, dass die Führungsnut 15 so ausgebildet sein muss, dass sie keinen Anschlag für den Schneideeinsatz 3 beziehungsweise dessen Führungsfeder 16 entgegen der Hauptschnittrichtung 11 ausbildet, wie dies in der Fig. 2 verdeutlicht ist, um eine Doppelpassung zu vermeiden.

Damit trotz der verschiedenen Sicherungen des Schneideeinsatzes 3 ein kraftschonendes Lösen desselbigen möglich ist, ragt der Klemmfortsatz 6 zum einfachen Lösen aus der Aufnahme 2 in eine Werkzeugaufnahme 18. Um das Ansetzen eines geeigneten als Lösewerkzeug ausgebildeten Drehschlüssels 17 an den Klemmfortsatz 6 zu erleichtern, schließt die quer zur Hauptschnittrichtung 11 und zu den Klemmflächennormalen verlaufende, zylindrische Werkzeugaufnahme 18 an den Klemmabschnitt 9 an, wie dies am besten aus den Fig. 1 und 2 hervorgeht. In der Einführstellung des Drehschlüssels 17 zeigt dessen Flachabschnitt 19, wie in der Fig. 3 abgebildet, in Richtung des Klemmfortsatzes 6. Durch eine von der Werkzeugaufnahme 18 geführten Drehbewegung des Drehschlüssels 17 wird die kraftschlüssige Verbindung zwischen Klemmfortsatz 6 und Klemmabschnitt 9 gelöst. Gegebenenfalls könnte das Lösewerkzeug auch ein Dorn mit kegelförmigem Kopf sein, der zum Lösen des Schneideeinsatzes 3 in die Werkzeugaufnahme 18 eingetrieben wird.

In der Fig. 4 ist eine Schrägansicht einer Ausführungsform des erfindungsgemäßen Schneideeinsatzes 3, welcher entgegen der Hauptschnittrichtung 11 eines über eine Schneideeinsatzanschlagsfläche 20 ragenden keilförmigen Klemmfortsatz 6 bildet. Durch Einfügen des Schneideeinsatzes 3 in die Aufnahme 2 des Trägers 1 durch beispielsweise Einhämmern oder Einklopfen wird eine Klemmung zwischen dem Klemmfortsatz 6 und dem Klemmabschnitt 9, wie es bei Morsekegel oder Morsekoni bekannt ist, erzeugt. Der Schneideinnsatz weist zudem eine Ausnehmung 14 zum Aufnehmen eines Sicherungselementes 13 auf, wobei das Sicherungselement 13 keine Spannungen auf den Schneideeinsatz 3 ausübt. Die Ausnehmung 14 bildet lediglich Anschläge für das Sicherungselement 13 um den Schneideeinsatz 3 gegen eine Bewegung in die und/oder entgegen der Hauptschnittrichtung 11 zu sichern.

## Patentansprüche

1. Spanabhebendes Werkzeug, insbesondere Sägeblatt, mit einem wenigstens eine Aufnahme (2) für einen Schneideeinsatz (3) bildenden Träger (1), wobei die eine Führungsbacke (4) und eine Anschlagsbacke (5) aufweisende Aufnahme (2) eine Backenanschlagfläche (10) für den Schneideeinsatz (3) und einen Klemmabschnitt (9) zum Greifen und Klemmen des Schneideeinsatzes (3) ausbildet, **dadurch gekennzeichnet, dass** sich der Klemmabschnitt (9) zum klemmenden Greifen eines keilförmigen Klemmfortsatzes (6) des Schneideeinsatzes (3) von der Backenanschlagfläche (10) aus entgegen der Hauptschnittrichtung (11) keilförmig verjüngt.

2. Spanabhebendes Werkzeug nach Anspruch 1, **dadurch gekennzeichnet, dass** die Führungsbacke eine Führungsnut (15) zur lateralen Abstützung eines bodenseitigen Ansatzes des Schneideeinsatzes (3) aufweist.

3. Spanabhebendes Werkzeug nach Anspruch 1 oder 2, **dadurch gekennzeichnet, dass** die Anschlagbacke (5) eine quer zu ihrer Klemmfläche verlaufende und die Klemmfläche durchbrechende Bohrung (12), insbesondere Gewindebohrung, aufweist.

4. Spanabhebendes Werkzeug nach einem der Ansprüche 1 bis 3, **dadurch gekennzeichnet, dass** an den sich verjüngenden keilförmigen Klemmabschnitt (9) eine quer zur Hauptschnittrichtung (11) und zu den Klemmflächennormalen verlaufende, zylindrische Werkzeugaufnahme (18) zum Lösen des geklemmten Schneideeinsatzes (3) anschließt.

5. Schneideeinsatz (3) für ein spanabhebendes Werkzeug, **dadurch gekennzeichnet, dass** der Schneideeinsatz (3) einen entgegen seiner Hauptschnittrichtung (11) über eine Schneideeinsatzanschlagsfläche (20) ragenden, keilförmigen Klemmfortsatz (6) ausbildet.

6. Schneideeinsatz (3) für ein spanabhebendes Werkzeug nach Anspruch 5, **dadurch gekennzeichnet, dass** der keilförmige Klemmfortsatz (6) anschlagsbackenseitig eine Ausnehmung (14) zum Aufnehmen eines Sicherungselementes (13), insbesondere einer Schraube, aufweist.

7. Schneideeinsatz (3) für ein spanabhebendes Werkzeug nach Anspruch 5 oder 6, **dadurch gekennzeichnet, dass** der Schneideeinsatz (3) auf derführungsbackenzugewandten Bodenseite eine Führungsfeder (16) aufweist.
